# EUROPEAN PATENT SPECIFICATION

(11) **EP 3 609 244 B1**
(45) Date of publication and mention of the grant of the patent: **30.09.2026**
(21) Application number: 18794169.5
(22) Date of filing: 25.04.2018
(51) Int. Cl.: H04B 7/08, H04W 52/42, H04W 52/08, H04W 52/14, H04B 7/06, H04W 52/24, H04W 52/32

(54) **METHOD AND DEVICE FOR CONFIGURING PARAMETERS**
VERFAHREN UND VORRICHTUNG ZUR KONFIGURIERUNG VON PARAMETERN
PROCÉDÉ ET DISPOSITIF DE CONFIGURATION DE PARAMÈTRES

(30) Priority: 05.05.2017 CN 201710312104
(43) Date of publication of application: 12.02.2020
(73) Proprietor: Huawei Technologies Co., Ltd., Longgang District Shenzhen, Guangdong 518129 (CN)
(72) Inventor: WANG, Yafei, Shenzhen Guangdong 518129 (CN); QIN, Yi, Shenzhen Guangdong 518129 (CN); ZHANG, Chi, Shenzhen Guangdong 518129 (CN)
(74) Representative: Goddar, Heinz J.
(86) International application number: PCT/CN2018/084378
(87) International publication number: WO 2018/201941

(56) References cited:
- WO-A2-2016/200454
- CN-A- 1 750 428
- CN-A- 101 677 255
- CN-A- 103 945 504
- HUAWEI ET AL: "Detailed considerations on UL power control design for NR", vol. RAN WG1, no. Spokane, USA; 20170403 - 20170407, 2 April 2017 (2017-04-02), XP051242380, Retrieved from the Internet <URL:http://www.3gpp.org/ftp/Meetings_3GPP_SYNC/RAN1/Docs/> [retrieved on 20170402]
- ERICSSON: "On power control for NR", vol. RAN WG1, no. Athens, Greece; 20170213 - 20170217, 7 February 2017 (2017-02-07), XP051221536, Retrieved from the Internet <URL:http://www.3gpp.org/ftp/tsg_ran/WG1_RL1/TSGR1_88/Docs/> [retrieved on 20170207]
- ASUSTEK: "UL power control in multi-beam based approaches", vol. RAN WG1, no. Spokane, USA; 20170403 - 20170407, 24 March 2017 (2017-03-24), XP051250754, Retrieved from the Internet <URL:http://www.3gpp.org/ftp/tsg_ran/WG1_RL1/TSGR1_88b/Docs/> [retrieved on 20170324]

## Description

### TECHNICAL FIELD

This application relates to the field of wireless communications technologies, and in particular, to a parameter configuration method, an apparatus, a computer-readable storage medium, and a computer program.

### BACKGROUND

With the development of wireless communications technologies, various new services keep emerging, and different services have different resource requirements. This requires various services in a future wireless network to be capable of using limited resources more effectively. As one of key technologies for a 5^{th} generation wireless (5^{th} generation, 5G, also referred to as new radio (New radio, NR)) network, a massive multiple-input multiple-output (massive multiple-input multiple-output, Massive MIMO) technology is deployed as a research and application hotspot in the academic circles and the industrial circles.

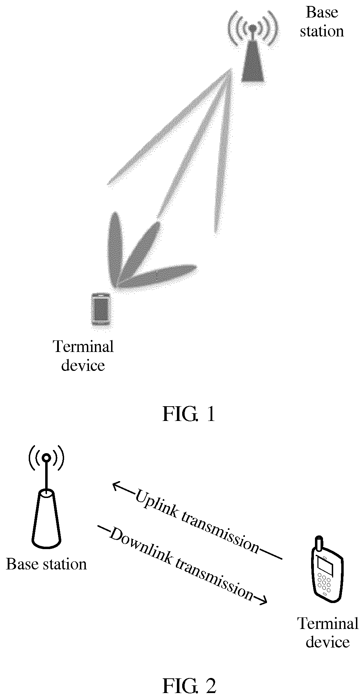

Based on the massive MIMO technology, antennas of a base station may form beams in different transmission directions, and antennas of a terminal device may also form beams in different transmission directions. Data may be transmitted between the terminal device and the base station through beam sweeping, so that spatial multiplexing and interference isolation of signals are implemented. FIG. 1 is a schematic diagram of beam transmission according to an example of this application. The base station and the terminal device sweep beams in different transmission directions, and a beam management technology is introduced for signal sending and receiving between the base station and the terminal device. As a technology that does not cause relatively large interference to a neighboring cell while ensuring that uplink data of the terminal device is correctly received by a network device, uplink power control plays an important role in a communications system. In discussion of NR standards, it is agreed to perform uplink power control based on a beam (Beam). Therefore, how to control uplink power based on the beam management technology is one of technical problems that need to be urgently resolved currently. HUAWEI ET AL, "Detailed considerations on UL power control design for NR", 3GPP DRAFT; R1-1704228; 3GPP TSG RAN WG1 Meeting #88bis; Spokane, USA; 20170403 - 20170407, discuss open issues in details on UL power control procedures and parameters. It proposes that common PC parameter setting between multiple specific power loops should be considered.

### SUMMARY

This application provides parameter configuration methods and related apparatuses in the independent claims, to simplify a parameter configuration manner of uplink power control and reduce signaling overheads of uplink power control. Possible implementation manners are disclosed in the dependent claims.

According to a first aspect, an embodiment of this application provides a parameter configuration method, according to claim 1.

According to another aspect, a base station is provided, according to claim 5.

According to a further aspect an embodiment of this application provides a computer storage medium according to claim 7.

According to another aspect, an embodiment of this application provides a computer program according to claim 6.

Further aspects are provided in the appended claims 2-4.

It should be understood that "couple" in this embodiment of this application indicates a direct combination or an indirect combination of two parts. The combination may be fixed or movable, and may allow communication of fluid, electricity, an electrical signal, or another type of signal between the two parts.

It should be understood that "couple" in this embodiment of this application indicates a direct combination or an indirect combination of two parts. The combination may be fixed or movable, and may allow communication of fluid, electricity, an electrical signal, or another type of signal between the two parts.

According to the embodiments of this application, signaling overheads consumed in configuration of the power control parameter can be reduced, and applicability of configuration of the power control parameter can be improved.

### BRIEF DESCRIPTION OF DRAWINGS

FIG. 1 is a schematic diagram of beam transmission according to an example of this application;
FIG. 2 shows a basic architecture of a communications system according to an example of this application;
FIG. 3 is a schematic flowchart of an embodiment of a parameter configuration method according to an embodiment of this application;
FIG. 4 is a schematic diagram of a beam pair link according to an example of this application;
FIG. 5 is a schematic flowchart of an embodiment of uplink power control according to an embodiment of this application;
FIG. 6 is a schematic structural diagram of a terminal device according to an embodiment of this application;
FIG. 7 is a schematic structural diagram of a base station according to an embodiment of this application; and
FIG. 8 is a schematic structural diagram of a communications device according to an embodiment of this application.

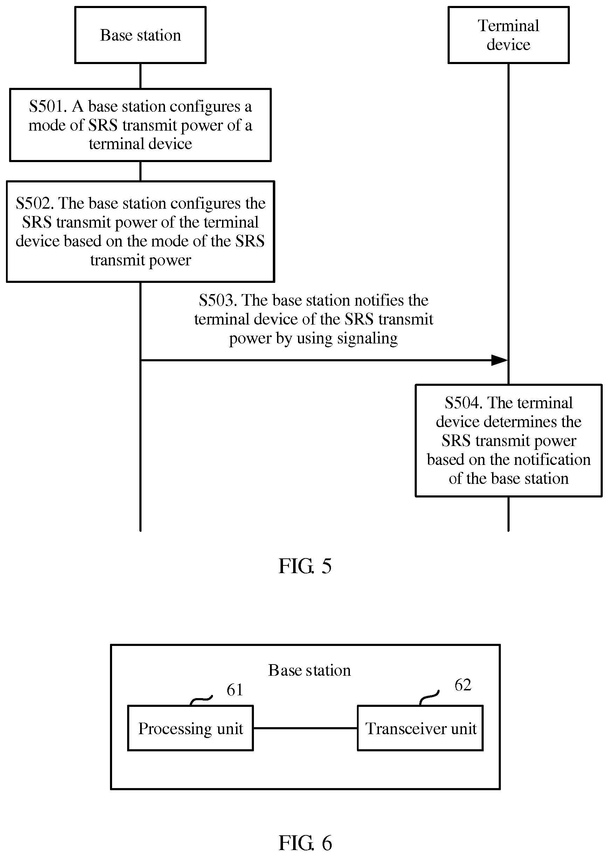

The embodiment of Fig. 5 is not according to the claims but useful for understanding aspects of the present application.

### DESCRIPTION OF EMBODIMENTS

The following describes the embodiments of this application with reference to the accompanying drawings in the embodiments of this application.

A parameter configuration manner provided in the embodiments of this application may be applied to a long term evolution (long term evolution, LTE) system or another wireless communications system using various radio access technologies, for example, a system that uses an access technology such as code division multiple access (code division multiple access, CDMA), frequency division multiple access (frequency division multiple access, FDMA), time division multiple access (time division multiple access, TDMA), orthogonal frequency division multiple access (orthogonal frequency division multiple access, OFDMA), or single carrier frequency division multiple access (single carrier-frequency division multiple access, SC-FDMA). The parameter configuration manner is further applicable to a subsequent evolved system, such as the 5G system (or referred to as an NR system). FIG. 2 shows a basic architecture of a communications system according to an example of this application. A base station and a terminal device may transmit data or signaling by using a radio interface, including uplink transmission and downlink transmission. The terminal device in this application may be a device (device) providing voice and/or data connectivity for a user, and may include a wired terminal and a wireless terminal. The wireless terminal may be a handheld device with a wireless connection function, another processing device connected to a wireless modem, or a mobile terminal that communicates with one or more core networks by using a radio access network. For example, the wireless terminal may be a mobile phone, a computer, a tablet computer, a personal digital assistant (personal digital assistant, PDA), a mobile Internet device (Mobile Internet Device, MID), a wearable device, or an e-book reader (e-book reader). For another example, the wireless terminal may be a portable, pocket-sized, handheld, computer built-in, or in-vehicle mobile device. For another example, the wireless terminal may be a mobile station (mobile station) or an access point (access point). User equipment (user equipment, UE) is a type of the terminal device, and is a name in the LTE system. For ease of description, in subsequent descriptions of this application, the devices mentioned above are collectively referred to as a terminal device for description. The base station in the embodiments of this application is an apparatus that is deployed in a radio access network (Radio Access Network, RAN) and that is configured to provide a wireless communication function for the terminal device. The base station may include a macro base station, a micro base station, a relay station, an access point, a base station controller, a transmission reception point (transmission reception point, TRP), and the like in various forms. Specific names of the base station in systems using different radio access technologies may be different. For example, in an LTE network, the base station is referred to as an evolved NodeB (evolved NodeB, eNB), and in a subsequent evolved system, the base station may be further referred to as a new radio NodeB (new radio nodeB, gNB). For ease of description, in subsequent descriptions of this application, the devices mentioned above are collectively referred to as a base station.

A technical problem to be resolved in the embodiments of this application is: based on the system architecture shown in FIG. 2, during uplink power control performed based on a beam (beam), how the base station configures a power control parameter of uplink control, and how to indicate the configured power control parameter to the terminal device.

A parameter configured by using the method provided in the embodiments of this application may be specifically a power control parameter for uplink power control. Power control parameters provided in the embodiments of this application may include a path loss compensation factor Alpha, a closed-loop power control parameter delta, and signal power P0 expected to be received on a base station side. The foregoing power control parameters are briefly described below.
1. Path loss compensation factor Alpha (which may be denoted as α, and Alpha is described below).
   The path loss compensation factor multiplied by a downlink path loss estimate PL is used to compensate for an uplink power loss during transmission. When Alpha is less than 1, partial path loss compensation is performed, and when Alpha is equal to 1, full path loss compensation is performed.
2. Closed-loop power control parameter delta (which may be denoted as Δ, and delta is described below).
   An uplink power adjustment value that is delivered by the base station side and that dynamically indicates the terminal device is indicated by a corresponding field in downlink control information (downlink control information, DCI).
3. Signal power P0 expected to be received on the base station side (which is referred to as P0 for short below).

The signal power P0 expected to be received on the base station side is determined based on uplink noise or an interference level, and a value of P0 reflects an average interference level or a relatively fixed noise level.

An open-loop parameter is a parameter configured by the base station and delivered to the terminal device, and does not need to be fed back by the terminal device. An update period of the open-loop parameter is relatively long, and the open-loop parameter may be delivered to the terminal device by using radio resource control (radio resource control, RRC) signaling or a system message. A closed-loop parameter is a parameter that is configured by the base station and delivered to the terminal device and that needs to be adjusted based on feedback information of the terminal device or measurement of an uplink channel. An update period of the closed-loop parameter is relatively short, and may be indicated to the terminal device by using DCI.

In some feasible implementations, in the foregoing power control parameters, the signal power P0 expected to be received on the base station side and the path loss compensation factor Alpha may be open-loop parameters, and the closed-loop power control parameter delta may be a closed-loop parameter.

Currently, beam-specific (beam-specific) power control solutions proposed during discussion of 3^{rd} generation partnership project (3^{rd} generation partnership project, 3GPP) proposals of NR mainly include the following:
Solution 1: Both the open-loop parameter and the closed-loop parameter may be configured based on a beam pair link (beam pair link, BPL). However, in this way, signaling overheads consumed for configuring the open-loop parameter and the closed-loop parameter are large, and applicability is low.
Solution 2: Both the open-loop parameter and the closed-loop parameter may be configured based on a beam (beam). A gain of a receive beam on the base station side is not considered in this solution.

In the foregoing technical solution, BPL-based power control parameter configuration is that a set of open-loop parameters or closed-loop parameters is configured for each BPL, or a set of open-loop parameters is configured for each BPL. There may be a plurality of BPLs between the base station and the terminal device. Therefore, large signaling overheads are caused if a set of power control parameters is configured for each BPL. In addition, in the BPLs between the base station and the terminal device, different BPLs may have a same open-loop parameter configuration, and an open-loop parameter does not need to be configured for each BPL. In the foregoing solution, signaling resources used for parameter configuration are wasted.

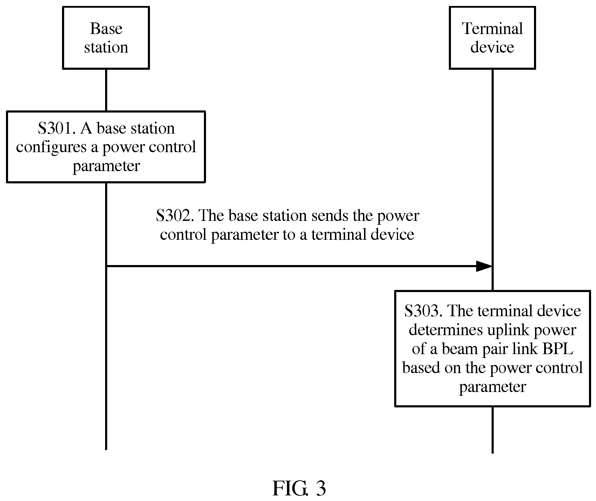

A parameter configuration method and an apparatus according to the embodiments of this application are described below with reference to FIG. 3 to FIG. 8. The method provided in the embodiments of this application includes: configuring an open-loop parameter and/or a closed-loop parameter of a BPL between a base station and a terminal device, and controlling uplink power of the BPL by configuring a power control parameter of the BPL. FIG. 3 is a schematic flowchart of an embodiment of a parameter configuration method according to an embodiment of this application. The parameter configuration method provided in this embodiment of this application includes the following steps.

S301. A base station configures a power control parameter.

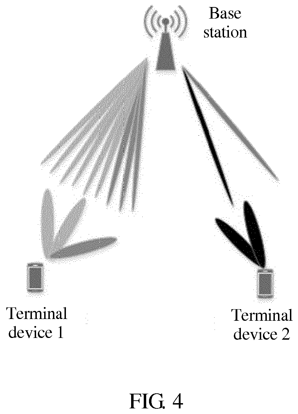

The base station obtains a BPL group through grouping based on a result of beam measurement between the base station and a terminal device. There are N BPLs between the base station and the terminal device, and N is an integer greater than or equal to 2. FIG. 4 is a schematic diagram of a BPL according to an example of this application. A BPL correspondence created between a receive beam of the base station and a transmit beam of the terminal device includes: One transmit beam of the terminal device corresponds to one receive beam of the base station, or one transmit beam of the terminal device corresponds to a plurality of receive beams (to be specific, at least two beams) of the base station, or a plurality of transmit beams of the terminal device correspond to a plurality of receive beams of the base station. For example, one transmit beam on a terminal device side corresponds to three receive beams on a base station side, or one receive beam on a base station side corresponds to two transmit beams on a terminal device side.

The base station groups the N BPLs between the terminal device and the base station into a plurality of BPL groups (BPL group) based on the beam measurement result. Each BPL group is indicated in an explicit indication manner such as a group identity (group identity, group ID) or a group index (group index), and in the explicit indication manner, each BPL group is indicated to the terminal device in a form of a message or signaling; or different BPL groups may be implicitly represented by using indication information such as a quasi co-location (quasi-located, QCL) parameter associated with the BPL.

Optionally, in some feasible implementations, the base station may group the BPLs between the base station and the terminal device into BPL groups based on a measurement index value in the beam measurement result. For example, the base station may group BPLs whose measurement index values are close into a same BPL group, and group BPLs whose measurement index values differ relatively greatly into different BPL groups. This is not limited herein.

During specific implementation, the base station may further deliver indication information by using signaling, and the indication information is used to notify the terminal device of a grouping result of the BPL groups. The signaling may include RRC signaling, system information, DCI, a MAC CE, and the like. The foregoing signaling is only examples and is not exhaustive. The signaling may be specifically determined based on an actual application scenario requirement, and is not limited herein. The foregoing grouping result may include a correspondence of BPLs that are between the base station and the terminal device and that are included in each BPL group, as shown in Table 1. Table 1 is a schematic table of a grouping result of the BPLs between the base station and the terminal device.

**Table 1**

| Beam identity of the base station side (TX beam ID) | Beam identity of the terminal device side (RX beam ID) | Identity of the BPL group (BPL group ID) |
|---|---|---|
| TX beam 1 | RX beam 1/2/3 | 0 |
| TX beam 2/3 | RX beam 4 | 1 |
| TX beam 4/5 | RX beam 5/6 | 2 |

As shown in Table 1, the BPL group 0 may include three BPLs: the TX beam 1 and the RX beam 1, the TX beam 1 and the RX beam 2, and the TX beam 1 and the RX beam 3. The BPL group 1 may include two BPLs: the TX beam 2 and the RX beam 4, and the TX beam 3 and the RX beam 4. The BPL group 2 may include four BPLs: the TX beam 4 and the RX beam 5, the TX beam 4 and the RX beam 6, the TX beam 5 and the RX beam 5, and the TX beam 5 and the RX beam 6.

After grouping the BPLs between the base station and the terminal device, the base station configures a first-type parameter based on the BPL group. In this embodiment of this application, a parameter configured based on the BPL group may be referred to as the first-type parameter. Specifically, a first-type parameter corresponding to each BPL group may be configured. All BPLs grouped in a same BPL group use a same first-type parameter; in other words, all the BPLs in the same BPL group use the same first-type parameter. For example, all the three BPLs in the BPL group 0 use a same first-type parameter, and the first-type parameter does not need to be independently configured for each BPL, thereby reducing signaling overheads for configuring the first-type parameter. It should be noted that the first-type parameter may include any one or more of parameters such as alpha, delta, and P0.

Further, the base station configures a second-type parameter based on the BPL. In this embodiment of this application, a parameter configured based on the BPL is referred to as the second-type parameter. Specifically, a second-type parameter corresponding to each BPL may be configured. The second-type parameter may also include any one or more of parameters such as alpha, delta, and P0. It should be noted that the parameters such as alpha, delta, and P0 may be configured as the first-type parameter, or may be configured as the second-type parameter. However, any parameter in alpha, delta, and P0 is not repeatedly configured. To be specific, alpha, delta, and P0 may be one of the first-type parameter and the second-type parameter. A configuration manner of the first-type parameter and the second-type parameter may include the following plurality of implementations: Implementation 1

In addition to configuring the first-type parameter based on the BPL group, the base station further configures the second-type parameter corresponding to the BPL. In this embodiment of this application, one set of second-type parameters may be independently configured for each BPL in a same BPL group; in other words, each BPL corresponds to one set of second-type parameters. The second-type parameter may include any one or more of the parameters such as alpha, delta, and P0, and a first-type parameter and a second-type parameter that are selected for uplink power control of any BPL do not include a same parameter. For example, for configuration results of the first-type parameter and the second-type parameter, refer to any one of implementations shown in Table 2. Table 2 is a schematic table of configuration of the first-type parameter and the second-type parameter.

**Table 2**

| Configuration manner | Parameter (the first-type parameter) configured based on the BPL group | Parameter (the second-type parameter) configured based on the BPL |
|---|---|---|
| 1 | Alpha | P0, delta |
| 2 | P0 | alpha, delta |
| 3 | delta | alpha, P0 |
| 4 | alpha, P0 | delta |
| 5 | P0, delta | alpha |
| 6 | alpha, delta | P0 |

It should be noted that the configuration manners shown in Table 2 are only some feasible implementations, and specifically, a configuration manner obtained based on any combination of alpha, P0, and delta may be further included. This is not limited herein.

### Implementation 2 (not according to the claims)

It should be noted that, in some feasible implementations, the base station may configure all power control parameters based on the BPL group; in other words, all the foregoing power control parameters (including alpha, delta, and P0) may be configured based on the BPL group. The first-type parameter may include alpha, delta, and P0. In this case, all the power control parameters may be configured based on the BPL group, and do not need to be independently configured for each BPL, so that operations are simple, and signaling overheads are smaller.

### Implementation 3

In some feasible implementations, the parameter P0 may also be configured in two parts, for example, P0 = P01 + P02. For example, in some feasible implementations, a value range of P0 is relatively large and is a semi-statically configured parameter. A relatively large quantity of bits are consumed to indicate P0 to the terminal device, and signaling overheads for parameter configuration are relatively large. If P0 is divided into P01 and P02, a value of P01 is used to determine an approximate value range of P0. A value range of P02 is relatively small, and fine-tuning is performed on a value of P0 based on P01. P01 is configured based on the BPL group, so that the signaling overheads for parameter configuration can be reduced. P02 is configured based on a BPL in the BPL group, so that power control accuracy can be improved. The first-type parameter includes one or more of alpha, delta, and the first part P01 of P0. The second-type parameter includes one or more of alpha, the second part P02 of P0, and delta, and the second-type parameter is different from the first-type parameter. For example, for configuration results of the first-type parameter and the second-type parameter, refer to any one of implementations shown in Table 3. Table 3 is a schematic table of configuration of the first-type parameter and the second-type parameter.

**Table 3**

| Configuration manner | Parameter (the first-type parameter) configured based on the BPL group | Parameter (the second-type parameter) configured based on the BPL |
|---|---|---|
| 1 | P01 | P02, alpha, delta |
| 2 | P01, alpha | P02, delta |
| 3 | P01, alpha | P02, alpha |
| 4 | P01, alpha, delta | P02 |

It should be noted that the configuration manners shown in Table 3 are only some feasible implementations, and specifically, a configuration manner obtained based on any combination of alpha, P01, P02, and delta may be further included. This is not limited herein. The foregoing implementation in which P01 is configured based on the BPL group and P02 is configured based on a BPL in the BPL group is applicable to the implementation 1 and the implementation 2.

S302. The base station sends the power control parameter to the terminal device.

The terminal device receives the power control parameter sent by the base station.

S303. The terminal device determines uplink power of a BPL based on the power control parameter.

The base station delivers the power control parameter to the terminal device by using signaling. Optionally, the base station may deliver the first-type parameter and the second-type parameter by using one piece of signaling, or may separately deliver the first-type parameter and the second-type parameter to the terminal device by using a plurality of pieces of signaling. This is not limited herein. After receiving, by using signaling, the first-type parameter and the second-type parameter that are notified by the base station, the terminal device may determine uplink power of each BPL based on the received power control parameter.

Optionally, the base station may further deliver the indication information (namely, first information) to the terminal device by using signaling, and notify the terminal device of a type of the power control parameter by using the first information. The type of the power control parameter includes the first-type parameter and the second-type parameter. For example, the foregoing signaling may include any one of RRC signaling, system information, DCI, and a MAC CE. During specific implementation, for example, the base station may send type indication information such as the group ID or the group index corresponding to the power control parameter P0 to the terminal device by using signaling, to notify the terminal device that the power control parameter P0 is the first-type parameter. Alternatively, the base station may send type indication information such as a BPL ID corresponding to the power control parameter delta to the terminal device, to notify the terminal device that the power control parameter delta is the second-type parameter, or the like.

Feasibly, the base station may deliver the power control parameter and the type of the power control parameter to the terminal device by using one piece of signaling, or may separately deliver the power control parameter and the type of the power control parameter to the terminal device by using a plurality of pieces of signaling. This is not limited herein. In some feasible implementations, the base station may further indicate a calculation mode of a downlink path loss estimate PL of the terminal device by using higher-layer signaling (for example, system information, RRC signaling, or a MAC CE), and the calculation mode includes a first calculation mode and a second calculation mode. The first calculation mode is calculating the PL based on the BPL group, to be specific, calculating a PL corresponding to each BPL group. All BPLs in one BPL group use a same PL. In other words, one BPL group maintains one PL. The second calculation mode is calculating the PL based on the BPL, to be specific, calculating a PL corresponding to each BPL. Each BPL uses one PL. In other words, each BPL in a BPL group maintains one PL. After receiving the indication of the base station by using higher-layer signaling, the terminal device may calculate, based on the first calculation mode or the second calculation mode, the PL corresponding to each BPL group, or the PL corresponding to each BPL, and may further calculate the uplink power of each BPL with reference to the first-type parameter and the second-type parameter. Table 4 is another parameter configuration table obtained with reference to the calculation mode of the PL in the parameter configuration manner shown in Table 2.

**Table 4**

| Configuration manner | Parameter (the first-type parameter) configured based on the BPL group | Parameter (the second-type parameter) configured based on the BPL | PL calculation mode |
|---|---|---|---|
| 1 | alpha | P0, delta | PL per BPL group |
| 2 | alpha | P0, delta | PL per BPL |
| 3 | P0 | alpha, delta | PL per BPL group |
| 4 | P0 | alpha, delta | PL per BPL |
| 5 | delta | alpha, P0 | PL per BPL group |
| 6 | delta | alpha, P0 | PL per BPL |
| 7 | alpha, P0 | delta | PL per BPL group |
| 8 | alpha, P0 | delta | PL per BPL |
| 9 | P0, delta | alpha | PL per BPL group |
| 10 | P0, delta | alpha | PL per BPL |
| 11 | alpha, delta | P0 | PL per BPL group |
| 12 | alpha, delta | P0 | PL per BPL |

Table 5 is another parameter configuration table obtained with reference to the calculation mode of the PL in the parameter configuration manner shown in Table 3.

**Table 5**

| Configuration manner | Parameter (the first-type parameter) configured based on the BPL group | Parameter (the second-type parameter) configured based on the BPL | PL calculation mode |
|---|---|---|---|
| 1 | P01 | P02, alpha, delta | PL per BPL group |
| 2 | P01 | P02, alpha, delta | PL per BPL |
| 3 | P01, alpha | P02, delta | PL per BPL group |
| 4 | P01, alpha | P02, delta | PL per BPL |
| 5 | P01, delta | P02, alpha | PL per BPL group |
| 6 | P01, delta | P02, alpha | PL per BPL |
| 7 | P01, alpha, delta | P02 | PL per BPL group |
| 8 | P01, alpha, delta | P02 | PL per BPL |

During specific implementation, after determining, based on signaling, information that is included in Table 4 or Table 5 and that is indicated by the base station, the terminal device may calculate, based on a PL calculation mode in any one of the foregoing configuration manners, a PL corresponding to the configuration manner, and may further determine, with reference to a first-type parameter and a second-type parameter that are included in the configuration manner, uplink power of a BPL corresponding to the configuration manner. In this embodiment of this application, the base station may control the uplink power of the terminal device by using the first-type parameter configured based on the BPL group and the second-type parameter configured based on the BPL, so that signaling overheads for configuring the power control parameter of the uplink power can be reduced, resource consumption of uplink control can be reduced, and applicability is higher.

In addition, for control of sounding reference signal (sounding reference signal, SRS) power, an embodiment of this application further provides an implementation of uplink power control. FIG. 5 is a schematic flowchart of an embodiment of uplink power control according to an embodiment of this application, wherein the embodiment of Fig. 5 is not according to the claims but included to illustrate aspects of this application. An uplink power control method provided in this embodiment of this application includes the following steps.

S501. A base station configures a mode of SRS transmit power of a terminal device.

In some feasible implementations, an SRS is used in a beam sweeping (beam sweeping) scenario. The base station may configure the mode of the SRS transmit power of the terminal device.

The mode of the SRS transmit power may include using same transmit power. To be specific, all SRS sending beams use same transmit power.

Further, in some feasible implementations, the base station may further configure a plurality of different SRSs of the terminal device as a plurality of SRS resource groups. In other words, the base station may configure at least two SRS resource groups. Each of the at least two SRS resource groups includes at least one SRS sending beam. A mode of SRS transmit power in the SRS resource group may include using different transmit power between SRS resource groups, and using same transmit power between SRSs in each SRS group.

S502. The base station configures the SRS transmit power of the terminal device based on the mode of the SRS transmit power.

In some feasible implementations, if the base station configures a mode of SRS transmit power in each SRS resource group as using same transmit power, the terminal device may determine minimum SRS transmit power in all SRS transmit power, and determine all the SRS transmit power as the minimum SRS transmit power. In other words, each SRS transmit power is configured as the minimum SRS transmit power. Feasibly, the base station may alternatively predefine one SRS transmit power, and each SRS transmit power is configured as the predefined SRS transmit power. The predefined SRS transmit power may be transmit power corresponding to a first SRS resource, or the like. This is not limited herein. In addition, the base station may further configure instruction information of an SRS resource, and the instruction information of the SRS resource is used to instruct the terminal device to determine the transmit power of each SRS based on transmit power of the SRS resource. In other words, each SRS transmit power is the same as or related to the transmit power of the SRS resource. This is not limited herein.

Further, in some feasible implementations, the base station may configure the mode of the SRS transmit power in each SRS resource group as using same transmit power and using different transmit power between SRS resource groups. When configuring each SRS transmit power, the base station may first configure the SRS transmit power corresponding to each SRS resource group, to further configure SRS transmit power of each BPL in each SRS resource. SRS transmit power of at least one of the at least two SRS resource groups is different from SRS transmit power of another SRS resource group. The base station may configure, based on the foregoing configuration manner of the SRS transmit power, SRS transmit power corresponding to an SRS resource group. A same SRS resource group has same SRS transmit power. Further, the base station configures a power difference between another SRS resource group and the SRS resource group. The another SRS resource group may correspond to a same SRS or a different SRS. The SRS transmit power of each SRS resource group may be determined based on the foregoing implementations, and details are not described herein again.

S503. The base station notifies the terminal device of the SRS transmit power by using signaling.

S504. The terminal device determines the SRS transmit power based on the notification of the base station.

In this embodiment of this application, signaling overheads for configuring the SRS transmit power can be reduced, and applicability is higher.

FIG. 6 is a schematic structural diagram of a base station according to an embodiment of this application. The base station provided in this embodiment of this application may include:
a processing unit 61, configured to configure a power control parameter, where the power control parameter includes a first-type parameter, and the first-type parameter is configured based on a beam pair link BPL group; and
a transceiver unit 62, configured to send the power control parameter configured by the processing unit 61 to a terminal device.

The power control parameter further includes a second-type parameter, and the second-type parameter is configured based on a BPL.

There are N BPLs between the base station and the terminal device, and N is an integer greater than or equal to 2; and
the processing unit 61 is further configured to group the N BPLs based on beam measurement results of the N BPLs, where
a quantity of the BPL groups is M, M is an integer greater than or equal to 1, and the BPL group includes more than one BPL.

That the first-type parameter is configured based on a beam pair link BPL group includes:
the first-type parameter corresponds to a BPL group, and BPLs included in the BPL group use the same first-type parameter.

In some feasible implementations, that the second-type parameter is configured based on a BPL includes:
the second-type parameter corresponds to the BPL, and one BPL uses one second-type parameter.

In some feasible implementations, the transceiver unit 62 is further configured to:
send first information to the terminal device, where
the first information is used to indicate a type of the power control parameter.

In some feasible implementations, the first-type parameter includes a path loss compensation factor alpha, and signal power P0 expected to be received on a base station side; and
the second-type parameter includes a closed-loop power control parameter delta. In some feasible implementations, the first-type parameter includes a path loss compensation factor alpha, signal power P0 expected to be received on a base station side, and a closed-loop power control parameter delta.

In some feasible implementations, signal power P0 expected to be received on a base station side includes a first part P01 and a second part P02, the first-type parameter includes P01 and a path loss compensation factor alpha, and the second-type parameter includes P02 and a closed-loop power control parameter delta.

In some feasible implementations, the transceiver unit 62 is further configured to:
indicate a calculation mode of a downlink path loss estimate PL of the terminal device; where
the calculation mode includes a first calculation mode and a second calculation mode;
the first calculation mode is calculating the PL based on a BPL group, where the BPLs in the BPL group use the same PL; and
the second calculation mode is calculating the PL based on a BPL, where one BPL uses one PL.

During specific implementation, the base station provided in this embodiment of this application may execute an implementation of the base station described in the steps in the foregoing embodiments, and details are not described herein again.

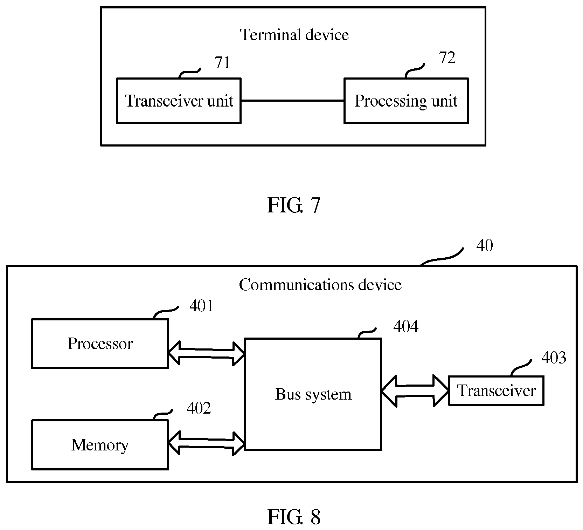

FIG. 7 is a schematic structural diagram of a terminal device according to an embodiment of this application. The terminal device provided in this embodiment of this application includes:
a transceiver unit 71, configured to receive a power control parameter sent by a base station, where the power control parameter includes a first-type parameter, and the first-type parameter is configured based on a beam pair link BPL group; and
a processing unit 72, configured to determine uplink power of a BPL based on the power control parameter received by the transceiver unit.

The power control parameter further includes a second-type parameter, and the second-type parameter is configured based on the BPL.

In some feasible implementations, that the first-type parameter is configured based on a beam pair link BPL group includes:
the first-type parameter corresponds to a BPL group, and BPLs included in the BPL group use the same first-type parameter.

In some feasible implementations, that the second-type parameter is configured based on the BPL includes:
the second-type parameter corresponds to the BPL, and one BPL uses one second-type parameter.

In some feasible implementations, the transceiver unit 71 is further configured to:
receive first information sent by the base station, where
the first information is used to indicate a type of the power control parameter.

In some feasible implementations, the first-type parameter includes a path loss compensation factor alpha, and signal power P0 expected to be received on a base station side; and
the second-type parameter includes a closed-loop power control parameter delta. In some feasible implementations, the first-type parameter includes a path loss compensation factor alpha, signal power P0 expected to be received on a base station side, and a closed-loop power control parameter delta.

In some feasible implementations, signal power P0 expected to be received on a base station side includes a first part P01 and a second part P02, the first-type parameter includes P01 and a path loss compensation factor alpha, and the second-type parameter includes P02 and a closed-loop power control parameter delta.

In some feasible implementations, the processing unit 71 is further configured to calculate, based on a calculation mode that is of a downlink path loss estimate PL and that is indicated by the base station, a PL corresponding to the BPL group or a PL corresponding to the BPL; where
the calculation mode includes a first calculation mode and a second calculation mode;
the first calculation mode is calculating the PL based on a BPL group, where the BPLs in the BPL group use the same PL; and
the second calculation mode is calculating the PL based on a BPL, where one BPL uses one PL.

During specific implementation, the terminal device provided in this embodiment of this application may execute an implementation of the terminal device described in the steps in the foregoing embodiments, and details are not described herein again.

In this embodiment of this application, the base station may control uplink power of the terminal device by using the first-type parameter configured based on the BPL group and the second-type parameter configured based on the BPL, so that signaling overheads for configuring a power control parameter of the uplink power can be reduced, resource consumption of uplink control can be reduced, and applicability is higher.

FIG. 8 is a schematic structural diagram of a communications device 40 according to an embodiment of this application. As shown in FIG. 8, the communications device 40 provided in this embodiment of this application includes a processor 401, a memory 402, a transceiver 403, and a bus system 404.

The processor 401, the memory 402, and the transceiver 403 are connected by using the bus system 404.

The memory 402 is configured to store a program. Specifically, the program may include program code, and the program code includes a computer operation instruction. The memory 402 includes but is not limited to a random access memory (random access memory, RAM), a read-only memory (read-only memory, ROM), an erasable programmable read only memory (erasable programmable read only memory, EPROM), or a compact disc read-only memory (compact disc read-only memory, CD-ROM). Only one memory is shown in FIG. 8. Certainly, a plurality of memories may be disposed as required. The memory 402 may be alternatively a memory in the processor 401. This is not limited herein.

The memory 402 stores the following elements: an executable module or a data structure, a subset thereof, or an extended set thereof:
an operation instruction, including various operation instructions and used to implement various operations; and
an operating system, including various system programs and used to implement various basic services and process a hardware-based task.

The processor 401 controls an operation of the communications device 40. The processor 401 may be one or more central processing units (central processing unit, CPU). When the processor 401 is one CPU, the CPU may be a single-core CPU, or may be a multi-core CPU.

In specific application, components of the communications device 40 are coupled together by using the bus system 404. In addition to a data bus, the bus system 404 may further include a power bus, a control bus, a status signal bus, and the like. However, for clear description, various buses are denoted as the bus system 404 in FIG. 8. For ease of illustration, FIG. 8 merely shows an example of the bus system 404.

FIG. 3 or FIG. 5 provided in the foregoing embodiments of this application, or the method of the terminal device disclosed in the foregoing embodiments, or the method of the base station disclosed in the foregoing embodiments may be applied to the processor 401 or implemented by the processor 401. The processor 401 may be an integrated circuit chip and has a signal processing capability. In an implementation process, each step of the foregoing method may be completed by using an integrated logic circuit of hardware in the processor 401 or an instruction in a form of software. The processor 401 may be a general purpose processor, a digital signal processor (digital signal processing, DSP), an application-specific integrated circuit (application specific integrated circuit, ASIC), a field-programmable gate array (field-programmable gate array, FPGA) or another programmable logic device, a discrete gate or transistor logic device, or a discrete hardware component, and may implement or perform the methods, steps, and logical block diagrams disclosed in the embodiments of this application. The general purpose processor may be a microprocessor or the processor may be any conventional processor, or the like. Steps of the methods disclosed in the embodiments of this application may be directly performed and completed by a hardware decoding processor, or may be performed and completed by using a combination of hardware and software modules in a decoding processor. The software module may be located in a mature storage medium in the art, such as a random access memory, a flash memory, a read-only memory, a programmable read-only memory or an electrically erasable programmable memory, or a register. The storage medium is located in the memory 402. The processor 401 reads information in the memory 402, and performs, in combination with hardware of the processor 401, the method steps of the terminal device described in FIG. 3, FIG. 5, or the foregoing embodiments, or performs, in combination with hardware of the processor 401, the method steps of the base station described in FIG. 3, FIG. 5, or the foregoing embodiments.

A person of ordinary skill in the art may understand that all or some of the processes of the methods in the embodiments may be implemented by a computer program instructing related hardware. The program may be stored in a computer readable storage medium. When the program is executed, the processes of the foregoing method embodiments may be performed. The foregoing storage medium includes any medium that can store program code, such as a ROM, a random access memory RAM, a magnetic disk, or a compact disc.

## Claims

1. A parameter configuration method, comprising:
configuring (S301), by a base station, a power control parameter, wherein the power control parameter comprises a first-type parameter and a second-type parameter; and
sending (S302), by the base station, the power control parameter to a terminal device;
wherein there are N beam pair links, BPLs, between the base station and the terminal device, and N is an integer greater than or equal to 2;
wherein the first-type parameter is configured based on a BPL group;
wherein the second-type parameter is configured based on a BPL;
wherein that the first-type parameter is configured based on a BPL group comprises: the first-type parameter corresponds to a BPL group, and all BPLs comprised in the BPL group use the same first-type parameter; and
wherein the method further comprises:
grouping, by the base station, the N BPLs based on beam measurement results of the N BPLs, wherein a quantity of the BPL groups is M, M is an integer greater than or equal to 1, and the BPL group comprises more than one BPL.

2. The method according to claim 1, wherein the second-type parameter is configured based on a BPL comprises:
the second-type parameter corresponds to a BPL, and one BPL uses one second-type parameter.

3. The method according to any one of claims 1 to 2, wherein signal power Po expected to be received at a base station side comprises a first part P01 and a second part P02, the first-type parameter comprises P01 and a closed-loop power control parameter delta, and the second-type parameter comprises Po2 and a path loss compensation factor alpha.

4. The method according to any one of claims 1 to 3, wherein the method further comprises:
indicating, by the base station, a calculation mode of a downlink path loss estimate PL of the terminal device; wherein
the calculation mode comprises a first calculation mode or a second calculation mode;
the first calculation mode is calculating the PL based on a BPL group, and a BPL in the BPL group use the same PL; and
the second calculation mode is calculating the PL based on a BPL, and one BPL uses one PL.

5. An apparatus, comprising a processor and a transceiver, wherein the apparatus is configured to perform any one of the methods of claims 1 to 4.

6. A computer program which, when the computer program is executed by a processor of a base station, causes the base station to perform the method of any one of claims 1 to 4.

7. A computer-readable storage medium comprising the computer program of claim 6 which, when the computer program is executed by a processor of a base station, causes the base station to perform the method of any one of claims 1 to 4.

## Patentansprüche

1. Parameterkonfigurationsverfahren, das Folgendes umfasst:
Konfigurieren (S301), durch eine Basisstation, eines Leistungssteuerungsparameters, wobei der Leistungssteuerungsparameter einen Parameter eines ersten Typs und einen Parameter eines zweiten Typs umfasst; und
Senden (S302), durch die Basisstation, des Leistungssteuerungsparameters an eine Endgerätevorrichtung;
wobei es N Strahlpaarverbindungen, BPLs, zwischen der Basisstation und der Endgerätevorrichtung gibt und N eine ganze Zahl größer als oder gleich 2 ist;
wobei der Parameter des ersten Typs basierend auf einer BPL-Gruppe konfiguriert wird;
wobei der Parameter des zweiten Typs basierend auf einer BPL konfiguriert wird;
wobei, dass der Parameter des ersten Typs basierend auf einer BPL-Gruppe konfiguriert wird, Folgendes umfasst: der Parameter des ersten Typs entspricht einer BPL-Gruppe und alle BPLs, die in der BPL-Gruppe enthalten sind, verwenden denselben Parameter des ersten Typs; und
wobei das Verfahren ferner Folgendes umfasst:
Gruppieren, durch die Basisstation, der N BPLs basierend auf Strahlmessergebnissen der N BPLs, wobei eine Anzahl der BPL-Gruppen M ist, M eine ganze Zahl größer als oder gleich 1 ist und die BPL-Gruppe mehr als eine BPL umfasst.

2. Verfahren nach Anspruch 1, wobei, dass der Parameter des zweiten Typs basierend auf einer BPL konfiguriert wird, Folgendes umfasst:
der Parameter des zweiten Typs entspricht einer BPL und eine BPL verwendet einen Parameter des zweiten Typs.

3. Verfahren nach einem der Ansprüche 1 bis 2, wobei die Signalleistung P0, deren Empfang auf einer Basisstationsseite erwartet wird, einen ersten Teil P01 und einen zweiten Teil P02 umfasst, der Parameter des ersten Typs P01 und einen Leistungsregelungsparameter delta umfasst und der Parameter des zweiten Typs P02 und einen Pfadverlustkompensationsfaktor alpha umfasst.

4. Verfahren nach einem der Ansprüche 1 bis 3, wobei das Verfahren ferner Folgendes umfasst:
Angeben, durch die Basisstation, eines Berechnungsmodus einer Downlink-Pfadverlustschätzung PL der Endgerätevorrichtung; wobei
der Berechnungsmodus einen ersten Berechnungsmodus oder einen zweiten Berechnungsmodus umfasst;
der erste Berechnungsmodus die PL basierend auf einer BPL-Gruppe berechnet und eine BPL in der BPL-Gruppe dieselbe PL verwendet; und
der zweite Berechnungsmodus die PL basierend auf einer BPL berechnet und eine BPL eine PL verwendet.

5. Einrichtung, die einen Prozessor und einen Sendeempfänger umfasst, wobei die Einrichtung dazu ausgelegt ist, eines der Verfahren nach den Ansprüchen 1 bis 4 durchzuführen.

6. Computerprogramm, das bei Ausführung des Computerprogramms durch einen Prozessor einer Basisstation bewirkt, dass die Basisstation das Verfahren nach einem der Ansprüche 1 bis 4 durchführt.

7. Computerlesbares Speichermedium, das das Computerprogramm nach Anspruch 6 umfasst, das bei Ausführung des Computerprogramms durch einen Prozessor einer Basisstation bewirkt, dass die Basisstation das Verfahren nach einem der Ansprüche 1 bis 4 durchführt.

## Revendications

1. Procédé de configuration de paramètres, comprenant :
la configuration (S301), par une station de base, d'un paramètre de commande de puissance, le paramètre de commande de puissance comprenant un paramètre de premier type et un paramètre de deuxième type ; et
l'envoi (S302), par la station de base, du paramètre de commande de puissance à un dispositif terminal ;
dans lequel N liaisons par paire de faisceaux, BPL, existent entre la station de base et le dispositif terminal, et N est un entier supérieur ou égal à 2 ;
dans lequel le paramètre de premier type est configuré sur la base d'un groupe de BPL ;
dans lequel le paramètre de deuxième type est configuré sur la base d'une BPL ;
dans lequel le fait que le paramètre de premier type soit configuré sur la base d'un groupe de BPL comprend : le paramètre de premier type correspond à un groupe de BPL, et toutes les BPL comprises dans le groupe de BPL utilisent le même paramètre de premier type ; et
le procédé comprenant en outre :
le groupement, par la station de base, des N BPL sur la base de résultats de mesure de faisceaux des N BPL, le nombre de groupes de BPL étant égal à M, M étant un entier supérieur ou égal à 1, et le groupe de BPL comprenant plus d'une BPL.

2. Procédé selon la revendication 1, dans lequel le fait que le paramètre de deuxième type soit configuré sur la base d'une BPL comprend :
le paramètre de deuxième type correspond à une BPL, et une BPL utilise un paramètre de deuxième type.

3. Procédé selon l'une quelconque des revendications 1 à 2, dans lequel une puissance de signal P0 devant être reçue côté station de base comprend une première partie P01 et une deuxième partie P02, le paramètre de premier type comprend P01 et un paramètre de commande de puissance en boucle fermée, delta, et le paramètre de deuxième type comprend P02 et un facteur de compensation de perte de propagation, alpha.

4. Procédé selon l'une quelconque des revendications 1 à 3, le procédé comprenant en outre :
l'indication, par la station de base, d'un mode de calcul d'une estimation de perte de propagation en liaison descendante, PL, du dispositif terminal ; dans lequel
le mode de calcul comprend un premier mode de calcul ou un deuxième mode de calcul ;
le premier mode de calcul consiste à calculer la PL sur la base d'un groupe de BPL, et une BPL dans le groupe BPL utilise la même PL ; et
le deuxième mode de calcul consiste à calculer la PL sur la base d'une BPL, et une BPL utilise une PL.

5. Appareil, comprenant un processeur et un émetteur-récepteur, l'appareil étant configuré pour réaliser l'un quelconque des procédés des revendications 1 à 4.

6. Programme d'ordinateur, lequel programme d'ordinateur, lorsqu'il est exécuté par un processeur d'une station de base, amène la station de base à réaliser le procédé de l'une quelconque des revendications 1 à 4.

7. Support de stockage lisible par ordinateur comprenant le programme d'ordinateur de la revendication 6, lequel programme d'ordinateur, lorsqu'il est exécuté par un processeur d'une station de base, amène la station de base à réaliser le procédé de l'une quelconque des revendications 1 à 4.
